(19) Europäisches Patentamt / European Patent Office / Office européen des brevets

(11) **EP 1 506 378 B1**

(12) **EUROPÄISCHE PATENTSCHRIFT**

(45) Veröffentlichungstag und Bekanntmachung des Hinweises auf die Patenterteilung:
**24.12.2014 Patentblatt 2014/52**

(21) Anmeldenummer: **03752695.1**

(22) Anmeldetag: **25.04.2003**

(51) Int Cl.:
***G01F 1/58*** *(2006.01)*

(86) Internationale Anmeldenummer:
**PCT/DE2003/001375**

(87) Internationale Veröffentlichungsnummer:
**WO 2003/098164 (27.11.2003 Gazette 2003/48)**

(54) **VERFAHREN ZUR MESSUNG EINES EIN MESSROHR DURCHSTRÖMENDEN MEDIUMS**

METHOD FOR MEASURING A MEDIUM THAT FLOWS THROUGH A MEASURING TUBE

PROCEDE DE MESURE D'UNE SUBSTANCE S'ECOULANT DANS UN TUYAU DE MESURE

(84) Benannte Vertragsstaaten:
**DE FR GB**

(30) Priorität: **16.05.2002 DE 10221677**

(43) Veröffentlichungstag der Anmeldung:
**16.02.2005 Patentblatt 2005/07**

(73) Patentinhaber: **Zylum Beteiligungsgesellschaft mbH & Co.**
**Patente II KG**
**12529 Schönefeld / Waltersdorf (DE)**

(72) Erfinder: **STANGE, Gerd**
**24589 Nortorf (DE)**

(74) Vertreter: **Meissner, Bolte & Partner GbR**
**Widenmayerstrasse 47**
**80538 München (DE)**

(56) Entgegenhaltungen:
**DE-A- 10 049 781     US-A- 2 982 822**

- **STANGE G: "UEBER EIN NEUES VERFAHREN ZUR DURCHFLUSSMESSUNG BEI ELEKTRISCH NICHT-LEITENDEN FLUESSIGKEITEN" TECHNISCHES MESSEN TM, R.OLDENBOURG VERLAG. MUNCHEN, DE, Bd. 66, Nr. 2, Februar 1999 (1999-02), Seiten 50-53, XP000891159 ISSN: 0171-8096**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Verfahren zur Messung der Fließgeschwindigkeit eines ein Messrohr durchströmendes Mediums, das von einem orthogonal zu der Fließrichtung liegendem, gleichbleibenden magnetischen Feld durchdrungen wird, bei dem die sich in dem Medium aufbauende elektrische Spannung über in der Ebene des magnetischen Feldes außen an der elektrisch isolierenden Wandung des Messrohrs angeordnete Elektroden abgefragt wird.

Es ist bekannt, den Durchfluss eines Mediums durch ein Messrohr durch kapazitives Messen der in dem Medium aufbauenden elektrischen Spannung zu erfassen (Helmut Brockhaus, Magnetisch-induktive Durchflußmessung mit kapazitiven Verfahren, Zeitschrift tm - Technisches Messen 64 (1997) 5, Oldenbourg Verlag, München).

Aus praktischen Erwägungen besteht ein großer Bedarf für ein Messsystem, das die Vorteile der kapazitiven Auskopplung mit jenen einer permanentmagnetischen Erregung vereint, wobei letztere im verschwindenden Leistungsbedarf zum Aufbau des magnetischen Feldes liegen. Ein solches System wäre auch besonders zur mikromechanischen Realisierung geeignet.

Lösungsansätze wurden in der DE 198 31 491 A1 sowie in der DE 100 49 781 A1 vorgeschlagen. Es wurde jedoch nach umfangreichen Untersuchungen gefunden, dass beide Vorschläge nicht ohne galvanische Hilfselektroden auskommen. Die mit diesen verbundenen galvanischen Potentiale lassen sich bei Anwendung zeitlich konstanter magnetischer Felder nicht vollständig eliminieren, ohne mit aufwändigen und für den praktischen Einsatz problematischen elektrochemischen Bezugselektroden zu arbeiten.

Es ist Aufgabe der Erfindung, ein Verfahren zur Durchflussmessung zu schaffen, dass mit einem geringen Energieaufwand arbeitet.

Erfindungsgemäß wird diese Aufgabe durch die im Anspruch 1 angegebenen Merkmale gelöst, die Unteransprüche geben vorteilhafte Ausgestaltungen der Erfindung an.

Erfindungsgemäß sind zur kapazitiven Auskopplung des der Durchflussrate des Strömungsmediums proportionalen Messsignals U0 ein von einem statischen Magnetfeld der Induktion B durchdrungenes, elektrisch isolierendes Meßrohr mit einer außen aufgebrachten, mit dem Rohrinneren jeweils eine kapazitive Einheit bildenden Auskopplungselektroden, vorgesehen. Die Kapazität wenigstens einer dieser kapazitiven Einheiten ist durch eine Steuereinrichtung veränderbar. Die durch die Kapazitätsänderung verursachte Ladungsänderung hängt u.a. von der im Inneren des Meßrohres durch Wechselwirkung der Geschwindigkeit v des strömenden Mediums mit dem Magnetfeld der Induktion induzierten Spannung ab. Mittels einer mit den kapazitäten Einheiten und der Steuereinrichtung verbundenen Mess- und Auswerteeinrichtung lässt sich auf diese Nutzspannung U0 und schließlich nach bekannten Verfahren auf die Durchflussrate des strömenden Mediums schließen. Die Rohrwandung bildeten dabei (wenigstens) einen Teil des Dielektrikums.

Grundsätzlich erlaubt das erfindungsgemäße Verfahren eine große Vielfalt von Lösungen zur technischen Realisierung der Kapazitätsänderung. In einer beispielhaften Variante wird die Kapazitätsänderung durch mechanische Maßnahmen herbeigeführt. Dazu können die Auskoppelelektroden z.B. so angeordnet werden, dass ihr Abstand gegenüber der Innenwandung des Messrohres variierbar ist. Die Abstandssteuerung kann z.B. durch magnetische Beeinflussung oder durch piezoelektrische Systeme erfolgen.

Es sind jedoch auch rotierende Anordnungen denkbar. In diesem Falle wird z.B. durch sektorweise unterschiedliche dielektrische oder geometrische Bedingungen auf einer rotierenden Kreisscheibe die wirksame Auskoppelkapazität verändert, wenn die betreffenden Sektoren den Auskoppelbereich überstreichen.

Eine nichtmechanische Variante stellt die elektronische Kapazitätssteuerung bei Verwendung von halbleitenden Schichten in der Auskopplungszone dar, indem diese bei unterschiedlichen, in Sperrrichtung angelegten Steuerspannungen nach dem von der Varaktordiode bekannten Prinzip praktisch leistungslos betrieben werden, so dass sich unterschiedliche Kapazitätswerte einstellen.

Besonders vielversprechend ist die Verwendung ferroelektrischer Schichten geringer Dicke als Dielektrikum in den Kondensatoren, deren Permittivität sich in weiten Grenzen durch Anlegen einer Steuerspannung variieren lässt. Gemeinsam mit der Verwendung eines Permanentmagneten zur Erzeugung des magnetischen Feldes ist diese Lösung ideal an die Fertigungsmöglichkeiten mikromechanischer Systeme angepasst, da Ferroelektrika mit Schichtdicken von wenigen Mikrometern ausreichend sind. Auf diese Weise ließen sich Durchflusssensoren mit geringsten Abmessungen realisieren, wie sie in vielen Bereichen, z.B. in der Medizin und in der chemischen Industrie von Interesse sind.

Das erfindungsgemäße Verfahren erlaubt eine beliebige Vielfalt hinsichtlich der zeitlichen Variation der Kapazitätsänderung. Neben dem nichtperiodischen Schallbetrieb sind periodische Betriebsweisen z.B. mit sinusförmigem oder rechteckförmigem Verlauf oder mit Pulsverlauf möglich, wobei die Periodendauer bequem den Messerfordernissen anzupassen ist.

Auch hinsichtlich der Signalauswertung bietet das erfindungsgemäße Verfahren eine Fülle von Möglichkeiten, die in ihren Einzelheiten naturgemäß von der Art der technischen Realisierung der Kapazitätsänderung abhängen. Einerseits lässt sich die Ladungsänderung an der veränderten Kapazität direkt messen, indem diese mit einem Ladungsverstärker, wie er aus der piezoelektrischen Messtechnik bekannt ist, direkt verbunden wird. Andererseits läßt sich - vorzugsweise im periodischen Betrieb - der als Folge der Ladungsänderung auftretende Strom bzw. der ihm entsprechende Spannungsabfall an einem Widerstand im geschlossenen Messkreis - ggf. nach geeigneter Verstärkung - auswerten.

Zusammenfassend lässt sich feststellen, dass die Erfindung den Weg zur Lösung des bisher als unlösbar geltenden Problems weist, das Prinzip des magnetisch-induktiven Durchflusssensors auch auf die Verwendung statischer Magnetfelder auszudehnen und dabei zugleich die bekannten Vorteile einer kapazitiven Signalauskopplung zu nutzen. Es bedarf der besonderen Erwähnung, dass sich mit Permanentmagneten aus der Gruppe der Seltenen Erden extrem hohe Magnetfelder bei geringstmöglichen Bauvolumina erzeugen lassen, wie sie mit elektrisch erregten Systemen nicht erreicht werden können. Da das induzierte Nutzsignal der Induktion proportional ist, kommt dieser Vorteil unmittelbar der Höhe des Messsignals zugute. Auf diese Weise lässt sich ein magnetisch-induktiver Durchflusssensor verwirklichen, der mit geringstmöglichem Leistungsaufwand bei höchstmöglicher Empfindlichkeit betrieben werden kann und damit hervorragende Voraussetzungen für den netzunabhängigen Betrieb mitbringt. Gemeinsam mit dem bekannten Vorteil völlig glatter Innenwandungen des Messrohres bei Abwesenheit mechanisch bewegter Teile innerhalb des Messmediums lassen sich so alle Anforderungen an moderne Sensorik erfüllen.

Ein besonderer Vorzug des erfindungsgemäßen Gedankens liegt in der Möglichkeit der mikrosystemtechnischen Realisierung mit bisher nicht gekannten geringen Abmessungen im mm-Bereich und darunter. Damit eröffnen sich breite Anwendungsmöglichkeiten in Medizin, Umwelttechnologie und Industrie.

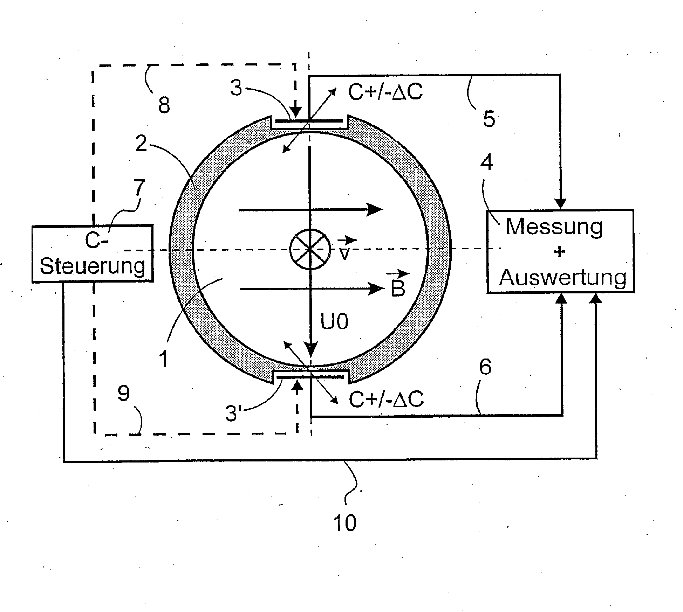

Die Erfindung wird im folgenden anhand einer Prinzipskizze in einer Zeichnung erläutert. Dabei zeigt die einzige Figur einen schematischen Querschnitt durch das Messrohr mit den außen befindlichen Auskoppelelektroden mit der ihrer Veränderung dienenden Steuereinrichtung und die an sie angeschlossene Mess- und Auswerteinrichtung.

Auf einer zu den in der Figur mit 'B' gekennzeichneten magnetischen Feldlinien orthogonalen Achse sind Auskoppelelektroden 3, 3' außerhalb des elektrisch isolierenden Messrohres 2 angeordnet, von denen mindestens eine in ihrer Größe durch die mit ihr verbundene Steuereinrichtung 7 veränderbar ist (angedeutet durch schräg verlaufenden Doppelpfeil). Die Auskoppelelektroden bilden mit dem Rohrinneren kapazitive Einheiten, die zur Auskopplung der im Inneren 1 des Messrohres 2 aufgrund der Wechselwirkung zwischen Strömungsgeschwindigkeit **v** und Magnetfeld **B** induzierten Spannung **U0** dienen, indem die als Folge einer Kapazitätsänderung der kapaziven Einheiten auftretende Ladungsänderung in einer über die Verbindungen **5, 6** angeschlossenen Mess- und Auswerteinrichtung **4** erfasst, aus ihr die Nutzspannung **U0** ermittelt und schließlich nach bekannten Gesetzmäßigkeiten daraus die Durchflussrate ermittelt wird.

Die folgenden Erläuterungen dienen lediglich beispielhaft der Herleitung der Beziehungen zwischen einer Kapazitätsänderung von C auf C + ∆C und der durch sie verursachten Ladungsänderung, sowie dem zeitlichen Verlauf des in der Mess- und Auswerteeinheit **4** zu beobachtenden Stromes i und der Spannung $u_R$, wenn diese Mess- und Auswerteeinheit **4** im einfachsten denkbaren Falle lediglich aus einem in die Verbindungsleitungen **5, 6** eingefügten Serienwiderstand R besteht und dabei $u_R$ die an ihm abfallende Spannung bedeutet.

Geht man vom Gleichgewichtszustand aus, der durch die gleiche Spannung von je UO/2 an den einander gleichen Ausgangskapazitäten C (3, **3**') gekennzeichnet ist, so wird durch die sprungartige, beidseitige Erhöhung von C auf C +∆C die Ladung

$$\Delta Q = 2\Delta C \cdot U0/2 = \Delta C \cdot U0$$

in den Messkreis fließen, die im geschlossenen Kreis über den Widerstand R den Strom

$$i = \frac{1}{RC}\Delta C \cdot U0 \cdot e^{-\frac{t}{RC}}$$

zur Folge hat und damit den Spannungsabfall

$$u_R = \frac{\Delta C}{C} \cdot U0 \cdot e^{-\frac{t}{RC}}$$

an R liefert.

Analog stellt sich im Falle einer sinusförmigen Kapazitätsänderung mit der Winkelfrequenz ω der Spannungsabfall

$$u_R = \frac{\Delta C}{C} \cdot U0 \cdot \sin \omega t$$

ein, solange der Kehrwert der Zeitkonstante RC als groß gegenüber der Winkelfrequenz ω vorausgesetzt werden kann.

Diese einfache Betrachtung verdeutlicht auf anschauliche Weise den Mechanismus der Auskopplung der Nutzspannung U0 durch die parametrische Änderung der Auskoppelkondensatoren. Mit möglichen relativen Kapazitätsänderungen ∆C/C >1 lässt sich sogar eine Verstärkung ohne Verwendung externer Verstärker realisieren, wenngleich diese Möglichkeit jederzeit zusätzlich besteht.

Das erfindungsgemäße Verfahren erlaubt eine große Vielfalt alternativer Steuer- und Auswertemöglichkeiten, die vorgelegte einfache Betrachtung dient lediglich dem Zweck der Erläuterung der prinzipiellen Wirkungsweise des erfindungsgemäßen Gedankens.

**Patentansprüche**

1. Verfahren zur Messung der Fließgeschwindigkeit eines ein Messrohr durchfließenden Mediums, das von einem orthogonal zu der Flussrichtung liegenden, gleichbleibenden magnetischen Feld (B) durchdrungen wird, bei dem die sich in dem Medium aufbauende elektrische Spannung (U0) über in einer orthogonal zu der Flußrichtung des Mediums liegenden Ebene an der Wandung des Meßrohrs (2) angeordnete, zu dem Medium isolierte Elektroden (3, 3') abgefragt wird,
**dadurch gekennzeichnet, dass**
die Kapazität wenigstens einer der durch die Elektroden (3, 3') und das Rohrinnere gebildeten kapazitiven Einheit (C) geändert wird, und
die durch die Änderung der wenigstens einen kapazitiven Einheit (C) bewirkte Ladungsänderung erfaßt und aus dieser die Spannung (U0) ermittelt wird.

2. Verfahren nach Anspruch 1, **dadurch gekennzeichnet, dass** die Änderung der Kapazität der wenigstens einen kapazitiven Einheit (C) durch Ändern des Abstands der Elektrode (3) zu dem Rohrinneren erfolgt.

3. Verfahren nach Anspruch 2, **dadurch gekennzeichnet, dass** die Änderung des Abstands der Elektrode (3) zum Rohrinneren durch mechanische Einwirkung erfolgt.

4. Verfahren nach Anspruch 2, **dadurch gekennzeichnet, dass** die Änderung des Abstands der Elektrode (3) zum Rohrinneren durch magnetische Einwirkung erfolgt.

5. Verfahren nach Anspruch 2, **dadurch gekennzeichnet, dass** die Änderung des Abstands der Elektrode (3) zum Rohrinneren piezoelektrisch erfolgt.

6. Verfahren nach Anspruch 1, **dadurch gekennzeichnet, dass** die Änderung der Kapazität der wenigstens einen kapazitiven Einheit (C) durch Ändern der Permittivität eines in den Raum zwischen Elektrode (3) und dem Rohrinneren eingebrachten Materials erfolgt.

7. Verfahren nach Anspruch 6, **dadurch gekennzeichnet, dass** das Material ein Halbleitermaterial ist, dessen Permittivität von einer an dieses in Sperrrichtung angelegten Spannung abhängig ist.

8. Verfahren nach Anspruch 6, **dadurch gekennzeichnet, dass** das Material ein ferroelektrisches Material ist, dessen Permittivität von einer an dieses angelegten Steuerspannung abhängig ist.

9. Verfahren nach einem der vorangehenden Ansprüche, **dadurch gekennzeichnet, dass** der bei der Änderung der Kapazität der wenigstens einen kapazitiven Einheit (C) fließende Ladestrom als Messwert zur Ermittlung der induzierten Spannung (U0) und damit der Strömungsgeschwindigkeit des Mediums erfasst wird.

**Claims**

1. A method for measuring the flow velocity of a medium flowing through a measuring tube, which medium is permeated by a constant magnetic field (B) being orthogonal to the flow direction, in which the electric voltage (U0) building up within the medium is retrieved via electrodes (3, 3') insulated towards the medium which are arranged in a plane orthogonal to the flow direction of the medium at a wall of the measuring tube (2),
**characterized in that**
the capacity of at least one capacitive unit (C) formed by the electrodes (3, 3') and the tube interior is changed, and
the change of charge caused by the changing of the at least one capacitive unit (C) is detected and the voltage (U0) detected therefrom.

2. The method according to claim 1, **characterized in that** the changing of the capacity of the at least one capacitive unit (C) is performed by changing the distance of the electrode (3) from the tube interior.

3. The method according to claim 2, **characterized in that** the changing of the distance of the electrode (3) from the tube interior is performed by mechanical action.

4. The method according to claim 2, **characterized in that** the changing of the distance of the electrode (3) from the tube interior is performed by magnetic action.

5. The method according to claim 2, **characterized in that** the changing of the distance of the electrode (3) from the tube interior is performed by piezoelectric action.

6. The method according to claim 1, **characterized in that** the change of the capacity of the at least one capacitive unit (C) is performed by changing the permittivity of a material introduced into the space between the electrode (3) and the tube interior.

7. The method according to claim 6, **characterized in that** the material is a semiconductor material, the permittivity thereof being dependent on a voltage applied in blocking direction.

8. The method according to claim 6, **characterized in that** the material is a ferroelectric material, the permittivity thereof being dependent on a control voltage applied to the same.

9. The method according to any of the preceding claims, **characterized in that** charging current flowing during the changing of the capacity of the at least one capacitive unit (C) is detected as a measured value for obtaining the induced voltage (U0) and thus the flow velocity of the medium.

## Revendications

1. Procédé de mesure de la vitesse d'écoulement d'un fluide s'écoulant à travers un tube de mesure et traversé par un champ magnétique (B) constant perpendiculaire à la direction d'écoulement, où la tension électrique (U0) qui s'établit dans le fluide est captée via des électrodes (3, 3') isolées par rapport au fluide, disposées sur la paroi du tube de mesure (2) dans un plan perpendiculaire à la direction d'écoulement du fluide,
**caractérisé en ce que**
on change la capacité d'au moins une unité capacitive (C) formée par les électrodes (3, 3') et l'intérieur de tube, et
le changement de charge provoqué par le changement de l'au moins une unité capacitive (C) est saisi et, à partir de celui-ci, la tension (U0) est déterminée.

2. Procédé selon la revendication 1, **caractérisé en ce que** le changement de la capacité de l'au moins une unité capacitive (C) s'effectue par changement de l'écart de l'électrode (3) par rapport à l'intérieur de tube.

3. Procédé selon la revendication 2, **caractérisé en ce que** le changement de l'écart de l'électrode (3) par rapport à l'intérieur de tube s'effectue par action mécanique.

4. Procédé selon la revendication 2, **caractérisé en ce que** le changement de l'écart de l'électrode (3) par rapport à l'intérieur de tube s'effectue par action magnétique.

5. Procédé selon la revendication 2, **caractérisé en ce que** le changement de l'écart de l'électrode (3) par rapport à l'intérieur de tube s'effectue de façon piézoélectrique.

6. Procédé selon la revendication 1, **caractérisé en ce que** le changement de la capacité de l'au moins une unité capacitive (C) s'effectue par changement de la permittivité d'un matériau introduit dans l'espace entre l'électrode (3) et l'intérieur de tube.

7. Procédé selon la revendication 6, **caractérisé en ce que** le matériau est un matériau semi-conducteur dont la permittivité dépend d'une tension appliquée à celui-ci en sens de blocage.

8. Procédé selon la revendication 6, **caractérisé en ce que** le matériau est un matériau ferroélectrique dont la permittivité dépend d'une tension de commande appliquée à celui-ci.

9. Procédé selon l'une des revendications précédentes, **caractérisé en ce que** le courant de charge s'écoulant en cas de changement de la capacité de l'au moins une unité capacitive (C) est saisi comme valeur de mesure pour déterminer la tension induite (U0) et donc la vitesse d'écoulement du fluide.

**EP 1 506 378 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19831491 A1
- DE 10049781 A1